# EUROPÄISCHE PATENTANMELDUNG

(11) **EP 3 885 661 A1**
(43) Veröffentlichungstag der Anmeldung: **29.09.2021**
(21) Anmeldenummer: 21162549.6
(22) Anmeldetag: 15.03.2021
(51) Int. Cl.: F24F 11/41, F24F 12/00

(54) **VERFAHREN ZUM BETREIBEN EINES LÜFTUNGSHEIZSYSTEMS UND LÜFTUNGSHEIZSYSTEM**

(30) Priorität: 25.03.2020 DE 102020203844
(71) Anmelder: Robert Bosch GmbH, 70442 Stuttgart (DE)
(72) Erfinder: Senn, Matthias, 73230 Kirchheim/Teck (DE); Shirani, Arsalan, 70199 Stuttgart (DE)

(57) **Zusammenfassung**

Die Erfindung betrifft ein Verfahren zum Betreiben eines Lüftungsheizsystems zum Zuführen von frischer Luft (auch Zuluft genannt) in mindestens einen Raum und zum Abführen von verbrauchter Luft (auch Abluft genannt) aus dem mindestens einen Raum, wobei in einem ersten Heiz-Verfahrensschritt zugeführte frische Luft und abgeführte verbrauchte Luft durch einen Luft/Luft-Wärmeübertrager geführt werden und Wärme von der abgeführten verbrauchten Luft auf die zugeführte frische Luft übertragen wird. Die Erfindung ist dadurch gekennzeichnet, dass in zumindest einem Abtau-Verfahrensschritt der Luft/Luft-Wärmeübertrager mittels einer von der abgeführten verbrauchten Luft transportierten Wärme abgetaut wird.

## Beschreibung

### Stand der Technik

Es ist bereits ein Verfahren zum Betreiben eines Lüftungsheizsystems zum Zuführen von frischer Luft in mindestens einen Raum und zum Abführen von verbrauchter Luft aus dem mindestens einen Raum bekannt.

### Offenbarung der Erfindung

Die Erfindung betrifft ein Verfahren zum Betreiben eines Lüftungsheizsystems zum Zuführen von frischer Luft (auch Zuluft genannt) in mindestens einen Raum und zum Abführen von verbrauchter Luft (auch Abluft genannt) aus dem mindestens einen Raum, wobei in einem ersten Heiz-Verfahrensschritt zugeführte frische Luft und abgeführte verbrauchte Luft durch einen Luft/Luft-Wärmeübertrager geführt werden und Wärme von der abgeführten verbrauchten Luft auf die zugeführte frische Luft übertragen wird.

In einem optionalen zweiten Heiz-Verfahrensschritt wird mittels eines Nacherwärmers weitere Wärme auf die zugeführte frische Luft übertragen. Dabei ist der Nacherwärmer hinsichtlich der zugeführten frischen Luft bevorzugt stromabwärts des Luft/Luft-Wärmeübertragers angeordnet.

Im Betrieb des Lüftungsheizsystems kann der Luft/Luft-Wärmeübertrager, insbesondere unter dem Einfluss der zugeführten frischen Luft, beispielsweise einer Temperatur der zugeführten frischen Luft, zeitweise vereisen.

Die Erfindung ist dadurch gekennzeichnet, dass in zumindest einem Abtau-Verfahrensschritt der Luft/Luft-Wärmeübertrager mittels einer von der abgeführten verbrauchten Luft transportierten Wärme abgetaut wird.

Die Wärme der abgeführten verbrauchten Luft erwärmt das Eis, den Luft/Luft-Wärmeübertrager, den Abluftkanal und/oder die Wärmeübertragungsfläche und taut diese ab.

Damit ist ein vorteilhaftes Abtauverfahren für ein Lüftungsheizsystem geschaffen.

### Zeichnung

Weitere Ausgestaltungen und Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen
Figur 1 ein erstes Lüftungsheizsystem,
Figur 2 ein zweites Lüftungsheizsystem.

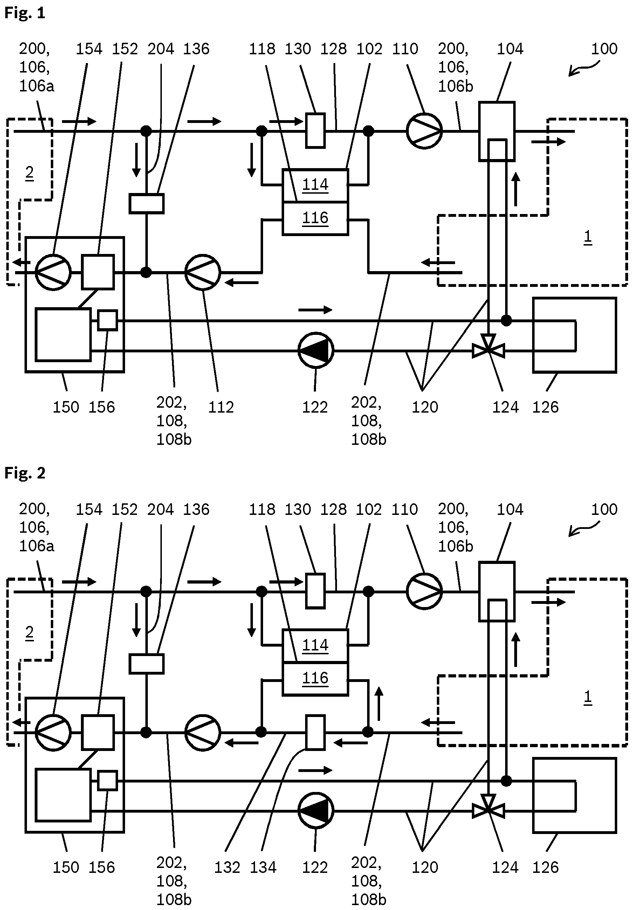

Figur 1 zeigt ein erstes Lüftungsheizsystem (100) zum Zuführen von frischer Luft (200) in mindestens einen Raum (1) und zum Abführen von verbrauchter Luft (202) aus dem mindestens einen Raum (1).

Unter einem Raum 1 wird hier insbesondere ein von Menschen oder anderen Lebewesen nutzbarer Wohnraum, Aufenthaltsraum, Arbeitsraum, Haustechnikraum oder Lagerraum verstanden Unter dem mindestens einen Raum 1 wird beispielsweise ein einzelner Raum, eine Wohnung, ein Haus oder ein Gebäude mit einem oder mehreren Räumen verstanden. Unter frischer Luft 200 wird insbesondere mit Schadstoffen unbelastete oder gering belastete Außenluft verstanden, wobei die frische Luft 200 insbesondere einer Außenumgebung 2 entnommen wird. Frische Luft 200 kann bei Temperaturen über einer Solltemperatur, im Bereich einer Solltemperatur, oder unter einer Solltemperatur des Raumes 1 vorliegen. Frische Luft 200 kann weiterhin bei variierenden relativen Feuchten vorliegen. Unter verbrauchter Luft 202 wird insbesondere Luft verstanden, die durch eine Nutzung des Raums 1 mit Schadstoffen oder Feuchtigkeit belastet ist. Unter einem Lüftungsheizsystem 100 wird insbesondere ein technisches System zum Zuführen von frischer Luft 200 in den Raum 1 (Belüften) und/oder zum Abführen von verbrauchter Luft 202 aus dem Raum 1 (Entlüften) verstanden. Das Lüftungsheizsystem 100 kann in einem Haustechnikraum aufgestellt sein. Insbesondere wird die Luft als ein Luftstrom zugeführt und/oder abgeführt, wobei der Luftstrom beispielsweise ein zumindest zeitweise kontinuierlich geförderter Luftstrom, und/oder ein in zeitlichen Intervallen geförderter Luftstrom, und/oder ein veränderlicher Luftstrom sein kann. Eine mögliche Strömungsrichtung der Luft wird mit Pfeilen angedeutet. Bei der dem Raum 1 zugeführten frischen Luft 200 kann es sich beispielsweise um erwärmte Luft handeln. In einem anderen Fall kann es sich um gekühlte Luft handeln. Damit kann der Raum 1 geheizt oder gekühlt werden. In noch einem anderen Fall kann es sich um eine nicht erwärmte und nicht gekühlte Luft handeln. Das Lüftungsheizsystem 100 umfasst insbesondere ein Leitungssystem zum Leiten der Luft beziehungsweise der Luftströme, insbesondere eine Zuluftleitung 106 zum Leiten der frischen Luft 200 von der Außenumgebung 2 in den Raum 1 sowie eine Abluftleitung 108 zum Leiten der verbrauchten Luft 202 von dem Raum 1 in die Außenumgebung 2. Gebläse und/oder Ventilatoren dienen dem Fördern der Luft. Insbesondere ein in der Zuluftleitung 106 angeordnetes Zuluftgebläse 110 fördert die zugeführte frische Luft 200 in den Raum 1. Insbesondere ein in der Abluftleitung 108 angeordnetes Abluftgebläse 112 fördert die abgeführte verbrauchte Luft 202 aus dem Raum 1. Zuluftgebläse 110 und Abluftgebläse 112 sind insbesondere in ihrer Förderleistung veränderbar, insbesondere regelbar und/oder steuerbar, so dass sie an aktuelle Lüftungserfordernisse anpassbar sind. Unter einem Heiz-Verfahrensschritt wird hier insbesondere ein Erwärmen der zugeführten frischen Luft 200 verstanden, insbesondere das Erwärmen auf eine Zuluft-Solltemperatur. Das Lüftungsheizsystem 100 umfasst weiter einen Luft/Luft-Wärmeübertrager 102 zur Rückgewinnung von Wärme aus der abgeführten verbrauchten Luft 202 und Übertragung der Wärme auf die zugeführte frische Luft 200. Der Luft/Luft-Wärmeübertrager 102 weist insbesondere zwei voneinander getrennte Luftkanäle auf, einen Zuluftkanal 114 für die zugeführte frische Luft 200 zum Verbinden mit der Zuluftleitung 106 und einen Abluftkanal 116 für die abgeführte verbrauchte Luft 202 zum Verbinden mit der Abluftleitung 108. Der Zuluftkanal 114 und der Abluftkanal 116 stehen, insbesondere über eine hydraulisch trennende Wärmeübertragungsfläche 118, in wärmeübertragender Verbindung miteinander. Der Luft/Luft-Wärmeübertrager 102 kann weiter eine Ablaufleitung (nicht dargestellt) zum Ableiten von anfallendem Kondenswasser umfassen. Unter einem Nacherwärmer 104 wird hier ein, insbesondere fluidisch oder elektrisch beheizter, Wärmeübertrager in der Zuluftleitung 106, insbesondere stromabwärts des Luft/Luft-Wärmeübertragers 102, verstanden zum optionalen Erwärmen der zugeführten frischen Luft 200 auf eine Zuluft-Solltemperatur. Ein durch eine Leitung 120 zirkulierbares Wärmeträgerfluid, das den Nacherwärmer 104 fluidisch beheizt, ist beispielsweise ein von einer Luft-Wärmepumpe 150, einem Heizkessel oder einer Solaranlage erwärmtes Wärmeträgerfluid. Zusätzlich zu den vorgenannten Wärmeerzeugern kann das Wärmeträgerfluid auch durch einen elektrischen Zuheizer 156 erwärmt werden. Eine mögliche Strömungsrichtung des Wärmeträgerfluids wird mit Pfeilen angedeutet.

Der Luft/Luft-Wärmeübertrager 102 kann im Laufe eines Betriebes des Lüftungsheizsystems 100 vereisen, insbesondere kann eine in der abgeführten verbrauchten Luft 202 vorhandene Feuchtigkeit im Abluftkanal 116 kondensieren und gefrieren, wenn die zugeführte frische Luft 200 im Zuluftkanal 114 sehr kalt ist. Dieses Eis kann eine effektive Wärmeübertragungsfläche 118 und/oder einen freien Strömungsquerschnitt des Abluftkanals 116 des Luft/Luft-Wärmeübertragers 102 reduzieren und verschließen, was zumindest einen Teilausfall des Lüftungsheizsystems 100 nach sich ziehen könnte. Unter einem Abtau-Verfahrensschritt wird hier insbesondere ein Schritt zum Abtauen eines gefrorenen Kondenswassers sowie insbesondere ein Ableiten des aufgetauten Kondenswassers in eine Ablaufleitung (nicht dargestellt) verstanden.

Ein Heiz-Verfahrensschritt und ein Abtau-Verfahrensschritt können sich in einem zeitlichen Betriebsablauf des Lüftungsheizsystems 100 getrennt voneinander ablaufen. Alternativ können ein Heiz-Verfahrensschritt und ein Abtau-Verfahrensschritt sich auch zeitlich überlappen.

Darunter, dass in zumindest einem Abtau-Verfahrensschritt der Luft/Luft-Wärmeübertrager 102 mittels einer von der abgeführten verbrauchten Luft 202 transportierten Wärme abgetaut wird, ist insbesondere zu verstehen, dass die Energie, die der abgeführten verbrauchten Luft 202, die aus dem Raum 1 über die Abluftleitung 108 in den Abluftkanal 116 des Luft/Luft-Wärmeübertragers 102 geleitet wird, innewohnt, zum Schmelzen einer im Abluftkanal 116 vorliegenden Vereisung genutzt wird. Das dann flüssig vorliegende Kondenswasser kann durch die Ablaufleitung ablaufen.

Der Luft/Luft-Wärmeübertrager 102 dient einer Rückgewinnung und Übertragung von Wärme von der abgeführten verbrauchten Luft 202 auf die zugeführte frische Luft 200. Optional umfasst das Lüftungsheizsystem 100 einen hinsichtlich der zugeführten frischen Luft 200 stromabwärts des Luft/Luft-Wärmeübertragers 102 angeordneten Nacherwärmer 104 zum Übertragen von weiterer Wärme auf die zugeführte frische Luft 200. Der Luft/Luft-Wärmeübertrager 102 und/oder ein Verdampfer 152 einer den Nacherwärmer 104 beheizenden Luft-Wärmepumpe 150 können zeitweise einen vereisten Zustand aufweisen.

Das Lüftungsheizsystem 100 umfasst ferner ein Steuergerät und/oder Regelgerät (nicht dargestellt) zum Betreiben des Lüftungsheizsystems 100.

Entscheidungen des Steuergeräts und/oder Regelgeräts des Lüftungsheizsystems 100 können beispielsweise in Abhängigkeit einer Frischluft-, Abluft- und/oder Raumtemperatur und/oder einer Raumluftqualität und/oder auch in Abhängigkeit eines erfassten Abtaufortschritts erfolgen.

Das Lüftungsheizsystem 100 nach Figur 1 umfasst ferner eine Luft-Wärmepumpe 150 mit einem Kältemittelkreislauf (nicht dargestellt), einem luftdurchströmbaren Verdampfer 152, einem Kompressor (nicht dargestellt), einem Kondensator (nicht dargestellt) zum Übertragen von Wärme auf ein durch eine Leitung 120 zirkulierbares Wärmeträgerfluid, ein Expansionselement (nicht dargestellt).

Eine durch den Verdampfer 152 strömende Luft wird von einem Ventilator 154 gefördert. Bei der den Verdampfer 152 durchströmenden, vom Ventilator 154 geförderten Luft kann es sich, insbesondere ausschließlich, um die abgeführte verbrauchte Luft 202 aus dem Luft/Luft-Wärmeübertrager 102 handeln. Zusätzlich oder alternativ kann dem Verdampfer 152 zusätzliche frische Luft 204, insbesondere frische Luft aus einer Außenumgebung 2, zugeführt werden.

Die Zuführung der zusätzlichen frischen Luft 204 zum Verdampfer 152 kann mittels eines Ventils 136 geregelt oder gesteuert werden. Bei dem Ventil 136 kann es sich um ein Dreiwegeventil, ein Mischventil, ein Regelventil oder ein Absperrventil handeln

In der Wärmeträgerfluid-Leitung 120 ist eine Pumpe 122 zum Zirkulieren des Wärmeträgerfluids sowie ein Ventil 124 vorgesehen. Das Ventil 124 kann als Umschaltventil oder als Mischventil ausgebildet sein. Das Ventil 124 schaltet einen Strömungsweg des Wärmeträgerfluids zum Nacherwärmer 104 oder in einen Speicher 126. So kann mit dem Wärmeträgerfluid über den Nacherwärmer 104 die dem Raum zugeführte frische Luft 200 geheizt werden. Alternativ oder zusätzlich kann mit dem Wärmeträgerfluid ein Speicherfluid im Speicher 126 geheizt werden.

In dem zweiten Heiz-Verfahrensschritt kann die abgeführte verbrauchte Luft 202 aus dem Luft/Luft-Wärmeübertrager 102 als Wärmequelle auf einen Verdampfer 152 einer Luft-Wärmepumpe 150 geleitet werden, um ein in einem Kältemittelkreislauf der Luft-Wärmepumpe 150 zirkulierendes Kältemittel zumindest teilweise zu verdampfen, wobei von der Luft-Wärmepumpe 150 erzeugte Wärme mittels des Nacherwärmers 104 auf die zugeführte frische Luft 200 übertragen wird. Im Betrieb kann der Verdampfer 152 zeitweise vereisen. In zumindest einem Abtau-Verfahrensschritt wird der Verdampfer 152 mittels einer von der abgeführten verbrauchten Luft 202 transportierten Wärme abgetaut.

Das Lüftungsheizsystem 100 umfasst bei einer Ausführungsform weiter eine Luft-Wärmepumpe 150 . Die Luft-Wärmepumpe 150 nutzt eine Restwärme, die der abgeführten verbrauchten Luft 202 stromabwärts des Luft/Luft-Wärmeübertragers 102 noch innewohnt, und pumpt diese auf ein höheres Temperaturniveau, um damit den Nacherwärmer 104 zu heizen. Die Luft-Wärmepumpe 150 umfasst einen Kältemittelkreislauf und einen von Kältemittel durchströmten Verdampfer 152, dabei handelt es sich um einen Luft/Kältemittel-Wärmeübertrager. Der Verdampfer 152 beziehungsweise das Kältemittel im Verdampfer 152 der Luft-Wärmepumpe 150 entziehen der aus dem Luft/Luft-Wärmeübertrager 102 abgeführten verbrauchten Luft 202 bei niedriger Temperatur Wärme; dabei verdampft das Kältemittel. Der Verdampfer 152 ist sehr kalt, Feuchtigkeit in der abgeführten verbrauchten Luft 202 kann am Verdampfer 152 kondensieren und gefrieren. Das verdampfte Kältemittel wird in einem Kompressor (nicht dargestellt) der Luft-Wärmepumpe 150 verdichtet und erhitzt. Bei hoher Temperatur überträgt das Kältemittel Wärme auf ein Wärmeträgerfluid, das über die Leitung 120 in den Nacherwärmer 104 geleitet wird und diesen erhitzt. Alternativ wird das hoch temperierte Kältemittel direkt in den Nacherwärmer 104 geleitet. Damit wird die dem Raum 1 zugeführte frische Luft 200 erwärmt.

Damit ist ein vorteilhaftes Abtauverfahren für eine Kombination eines Lüftungsheizsystems mit einer Luft-Wärmepumpe geschaffen.

In zumindest einem Abtau-Verfahrensschritt kann eine Temperatur des Luft/Luft-Wärmeübertragers 102 , insbesondere eine Temperatur des Abluftkanals 116 und/oder der Wärmeübertragungsfläche 118 des Luft/Luft-Wärmeübertragers 102, erhöht werden.

Unter einer Temperatur des Luft/Luft-Wärmeübertragers 102, des Abluftkanals 116 und/oder der Wärmeübertragungsfläche 118 ist insbesondere eine an einer Begrenzungswand des Luft/Luft-Wärmeübertragers 102, des Abluftkanals 116 und/oder der Wärmeübertragungsfläche 118 messbare Temperatur zu verstehen. Auf diese Art erfolgt die Abtauung des Luft/Luft-Wärmeübertragers 102 und/oder des in Strömungsrichtung der abgeführten verbrauchten Luft 202 nachgeschalteten Verdampfers 152 besonders effektiv, da die von der abgeführten verbrauchten Luft 202 transportierte Wärme mehr Wirkung entfalten kann.

Die Wärme der abgeführten verbrauchten Luft 202 kann das Eis, den Luft/Luft-Wärmeübertrager 102, den Abluftkanal 116 und/oder die Wärmeübertragungsfläche 118 erwärmen und abtauen.

In zumindest einem Abtau-Verfahrensschritt kann die Temperatur des Luft/Luft-Wärmeübertragers 102, insbesondere die Temperatur des Abluftkanals 116 und/oder der Wärmeübertragungsfläche 118 des Luft/Luft-Wärmeübertragers 102, erhöht werden, indem die zugeführte frische Luft 200 zumindest teilweise an dem Luft/Luft-Wärmeübertrager 102 vorbei durch einen Bypass 128 geleitet wird.

Der Bypass 128 verbindet einen hinsichtlich eines Strömungsweges der zugeführten frischen Luft 200 stromaufwärts des Luft/Luft-Wärmeübertragers 102 angeordneten Zuluftleitungsabschnitt 106a mit einem weiteren Zuluftleitungsabschnitt 106b stromabwärts des Luft/Luft-Wärmeübertragers 102 unter Umgehung des Luft/Luft-Wärmeübertragers 102, insbesondere unter Umgehung des Zuluftkanals 114. Dabei wird die zugeführte frische Luft 200 an dem Luft/Luft-Wärmeübertrager 102 vorbei geleitet, so dass die zugeführte frische Luft 200 den Luft/Luft-Wärmeübertrager 102 nicht durchströmt. Es erfolgt keine Rückgewinnung und Übertragung von Wärme aus der abgeführten verbrauchten Luft 202 auf die zugeführte frische Luft 200, da mit ausbleibender Durchströmung auf der Zuluftseite auch keine Wärme aus dem Luft/Luft-Wärmeübertrager 102 abgeführt wird. Unter Einfluss der abgeführten verbrauchten Luft 202 erwärmen sich der Luft/Luft-Wärmeübertrager 102, der Abluftkanal 116 und/oder die Wärmeübertragungsfläche 118 auf eine Temperatur, die größer ist als die normale Arbeitstemperatur in einem Betrieb ohne den gerade erfolgenden Abtau-Verfahrensschritt. Auf diese Weise erwärmen sich der Luft/Luft-Wärmeübertrager 102 und/oder der in Strömungsrichtung der abgeführten verbrauchten Luft 202 nachgeschaltete Verdampfer 152 und erfolgt ihre Abtauung besonders effektiv, da die von der abgeführten verbrauchten Luft 202 transportierte Wärme mehr Wirkung entfalten kann.

Alternativ kann die zugeführte frische Luft 200 auch aufgeteilt und teilweise durch den Luft/Luft-Wärmeübertrager 102 sowie teilweise durch den Bypass 128 geleitet werden. Beispielsweise kann die Aufteilung so erfolgen, dass eine Hälfte der zugeführten frischen Luft 200 durch den Luft/Luft-Wärmeübertrager 102 und die andere Hälfte durch den Bypass 128 geleitet werden. Die Aufteilung kann auch in anderen Anteilen an einem gesamten Zuluftvolumenstrom erfolgen. So kann sich eine gegenüber dem vorstehend Beschriebenen verzögerte Abtauwirkung einstellen, während gleichzeitig eine teilweise Rückgewinnung und Übertragung von Wärme aus der abgeführten verbrauchten Luft 202 auf die zugeführte frische Luft 200 erfolgt.

Die Wärme der abgeführten verbrauchten Luft 202 kann das Eis, den Luft/Luft-Wärmeübertrager 102, den Abluftkanal 116 und/oder die Wärmeübertragungsfläche 118 erwärmen und abtauen.

Die zugeführte frische Luft 200 wird nun insbesondere durch den Nacherwärmer 104 erwärmt und strömt in den mindestens einen Raum 1.

Zum Umleiten der zugeführten frischen Luft 200 am Luft/Luft-Wärmeübertrager 102 vorbei durch den Bypass 128, beziehungsweise zum Aufteilen der zugeführten frischen Luft 200 in Anteile auf den Luft/Luft-Wärmeübertrager 102 und den Bypass 128, kann insbesondere ein Dreiwegeventil, ein Mischventil, ein Regelventil oder ein Absperrventil 130 verwendet werden.

Das Dreiwegeventil kann zwischen zwei Schaltstellungen umschalten: Durchgängigkeit für die zugeführte frische Luft 200 nur durch den Zuluftkanal 114. Oder Durchgängigkeit nur durch den Bypass 128. Das Mischventil kann zusätzlich zu den Schaltstellungen (Endstellungen) des Dreiwegeventils auch Zwischenstellungen zur Aufteilung der zugeführten frischen Luft 200 auf den Zuluftkanal 114 und den Bypass 128 zulassen. Das Absperrventil 130 kann zwischen zwei Schaltstellungen umschalten: Durchgängigkeit für die zugeführte frische Luft 200 nur durch den Zuluftkanal 114. Oder Durchgängigkeit durch den Zuluftkanal 114 und den Bypass 128. Es kann ein weiteres Absperrventil (nicht dargestellt) vor oder hinter dem Zuluftkanal 114 vorgesehen sein zum Schließen des Zuluftkanals 114. Ein Regelventil kann variierbare Ventilöffnungsgrade realisieren.

Eine Entscheidung eines Regelgeräts (nicht dargestellt) des Lüftungsheizsystems 100 zum Umleiten oder Aufteilen oder zur Wahl der Luftanteile beim Aufteilen der zugeführten frischen Luft 200 kann beispielsweise in Abhängigkeit einer Frischluft-, Abluft- und/oder Raumtemperatur und/oder einer Raumluftqualität erfolgen. Weiter kann die Umleitung oder Aufteilung auch in Abhängigkeit eines erfassten Abtaufortschritts erfolgen.

Bei dem Bypass 128 kann es sich um einen sogenannten Sommer-Bypass handeln, der im Sommer bei höheren Außentemperaturen verwendet wird, um abgeführte verbrauchte Luft 202 ohne Wärmerückgewinnung aus dem Raum 1 abzuleiten.

In zumindest einem Abtau-Verfahrensschritt kann ein Volumenstrom der abgeführten verbrauchten Luft 202 gesteuert oder geregelt, insbesondere erhöht, werden.

Eine Regelung oder Steuerung, insbesondere Erhöhung, des Volumenstroms der abgeführten verbrauchten Luft 202 erfolgt insbesondere, indem eine Förderleistung eines fördernden Abluftgebläses 112 gesteuert oder geregelt, insbesondere erhöht, wird. Dies kann beispielsweise in Abhängigkeit der Frischluft-, Abluft- und/oder Raumtemperatur und/oder einer Raumluftqualität erfolgen. Weiter kann die Regelung oder Steuerung auch in Abhängigkeit eines erfassten Abtaufortschritts erfolgen.

In zumindest einem Abtau-Verfahrensschritt kann die Verdampferleistung des Verdampfers 152 gesteuert oder geregelt, insbesondere verringert, werden.

Eine Regelung oder Steuerung, insbesondere Verringerung, der Verdampferleistung des Verdampfers 152 erfolgt insbesondere, indem ein Volumenstrom von Kältemittel durch den Verdampfer 152 geregelt oder gesteuert, insbesondere verringert, wird, beispielsweise indem eine Förderleistung eines Kompressors (nicht dargestellt) der Luft-Wärmepumpe 150 geregelt oder gesteuert, insbesondere verringert, wird, und/oder der Kompressor eingeschaltet und/oder ausgeschaltet wird. Dies kann beispielsweise in Abhängigkeit der Frischluft-, Abluft- und/oder Raumtemperatur und/oder einer Raumluftqualität erfolgen. Weiter kann die Regelung oder Steuerung auch in Abhängigkeit eines erfassten Abtaufortschritts erfolgen.

In zumindest einem Abtau-Verfahrensschritt kann eine Strömungsrichtung des in dem Kältemittelkreislauf der Luft-Wärmepumpe 150 zirkulierenden Kältemittels gegenüber einer Strömungsrichtung des Kältemittels in einem Heiz-Verfahrensschritt umgedreht und der Verdampfer 152 von dem Kältemittel erwärmt werden.

Bei Umkehr der Strömungsrichtung des Kältemittels wird der zuvor Wärme aufnehmende, kalte Verdampfer nun von heißem Kältemittel durchströmt. Die Strömungsumkehr kann beispielsweise mit einem Umschalten eines Vierwegeventils im Kältemittelkreislauf erfolgen.

In zumindest einem Abtau-Verfahrensschritt kann ein Volumenstrom einer den Verdampfer 152 durchströmenden Luft gesteuert oder geregelt, insbesondere verringert, und dem Volumenstrom der abgeführten verbrauchten Luft 202 angepasst, insbesondere angeglichen werden.

Hintergrund dieser Ausführungsform ist der Umstand, dass dem Verdampfer 152 in einem Heiz-Verfahrensschritt neben der abgeführten verbrauchten Luft 202 aus dem Luft/Luft-Wärmeübertrager 102 auch zusätzliche frische Luft 204, insbesondere frische Luft aus einer Außenumgebung 2, zugeführt werden kann. Diese zusätzliche frische Luft 204 ist zeitweise kälter als die abgeführte verbrauchte Luft 202 und kann so kalt sein, dass ein Abtauen des Verdampfers 152, insbesondere ohne weitere Maßnahme, verlangsamt werden könnte. In diesem Fall soll der den Verdampfer 152 durchströmende Luftvolumenstrom so gesteuert oder geregelt werden, dass ein Abtauen möglichst schnell fortschreitet. Dies erfolgt insbesondere bei Minimierung der zusätzlichen frischen aus der Außenumgebung 2 zugeführten Luft 204 und Beaufschlagung des Verdampfers 152 im Wesentlichen ausschließlich mit der abgeführten verbrauchten Luft 202 aus dem Luft/Luft-Wärmeübertrager. Dabei fördert der Ventilator 154 des Verdampfers 152 im Wesentlichen nur die Menge abgeführter verbrauchter Luft 202 aus dem Luft/Luft-Wärmeübertrager 102, die das Abluftgebläse 112 fördert.

Figur 2 zeigt, dass in zumindest einem Abtau-Verfahrensschritt die abgeführte verbrauchte Luft 202 zumindest teilweise an dem Luft/Luft-Wärmeübertrager 102 vorbei durch einen weiteren Bypass 132 zu dem Verdampfer 152 geleitet werden kann.

Ein Volumenstrom einer den Verdampfer 152 durchströmenden Luft wird direkt aus dem Raum 1 über die Abluftleitung 108 und unter Umgehung des Abluftkanals 116 des Luft/Luft-Wärmeübertragers 102 durch einen weiteren Bypass 132 geleitet.

Der weitere Bypass 132 verbindet einen hinsichtlich eines Strömungsweges der abgeführten verbrauchten Luft 202 stromaufwärts des Luft/Luft-Wärmeübertragers angeordneten Abluftleitungsabschnitt 108a mit einem weiteren Abluftleitungsabschnitt 108b stromabwärts des Luft/Luft-Wärmeübertragers 102 unter Umgehung des Abluftkanals 116. Dabei wird die abgeführte verbrauchte Luft 202 an dem Luft/Luft-Wärmeübertrager 102 vorbei geleitet, so dass die abgeführte verbrauchte Luft 202 den Luft/Luft-Wärmeübertrager 102 nicht durchströmt. Es erfolgt keine Rückgewinnung und Übertragung von Wärme aus der abgeführten verbrauchten Luft 202 auf die zugeführte frische Luft 200, da mit ausbleibender Durchströmung auf der Abluftseite auch keine Wärme in den Luft/Luft-Wärmeübertrager 102 eingebracht wird. Unter Einfluss der abgeführten verbrauchten Luft 202 erwärmt sich der Verdampfer 152 auf eine Temperatur, die größer ist als die normale Arbeitstemperatur in einem Betrieb ohne den gerade erfolgenden Abtau-Verfahrensschritt. Auf diese Weise erwärmt sich Verdampfer 152 und erfolgt seine Abtauung besonders effektiv, da die von der abgeführten verbrauchten Luft 202 transportierte Wärme mehr Wirkung entfalten kann.

Alternativ kann die abgeführte verbrauchte Luft 202 auch aufgeteilt und teilweise durch den Luft/Luft-Wärmeübertrager 102 sowie teilweise durch den weiteren Bypass 132 geleitet werden. Beispielsweise kann die Aufteilung so erfolgen, dass eine Hälfte der abgeführten verbrauchten Luft 202 durch den Luft/Luft-Wärmeübertrager 102 und die andere Hälfte durch den weiteren Bypass 132 geleitet werden. Die Aufteilung kann auch in anderen Anteilen an einem gesamten Abluftvolumenstrom erfolgen. So stellt sich eine gegenüber dem vorstehend Beschriebenen verzögerte Abtauwirkung ein.

Die Wärme der abgeführten verbrauchten Luft 202 kann das Eis und den Verdampfer 152 erwärmen und abtauen.

Zum Umleiten der abgeführten verbrauchten Luft 202 am Luft/Luft-Wärmeübertrager 102 vorbei durch den weiteren Bypass 132, beziehungsweise zum Aufteilen der abgeführten verbrauchten Luft 202 in Anteile auf den Luft/Luft-Wärmeübertrager 102 und den weiteren Bypass 132, kann insbesondere ein Dreiwegeventil, ein Mischventil, ein Regelventil oder ein Absperrventil 134 verwendet werden.

Das Dreiwegeventil kann zwischen zwei Schaltstellungen umschalten: Durchgängigkeit für die abgeführte verbrauchte Luft 202 nur durch den Abluftkanal 116. Oder Durchgängigkeit nur durch den Bypass 132. Das Mischventil kann zusätzlich zu den Schaltstellungen (Endstellungen) des Dreiwegeventils auch Zwischenstellungen zur Aufteilung der abgeführten verbrauchten Luft 202 auf den Abluftkanal 116 und den Bypass 132 zulassen. Das Absperrventil 134 kann zwischen zwei Schaltstellungen umschalten: Durchgängigkeit für die abgeführte verbrauchte Luft 202 nur durch den Abluftkanal 116. Oder Durchgängigkeit durch den Abluftkanal 116 und den Bypass 132. Es kann ein weiteres Absperrventil (nicht dargestellt) vor oder hinter dem Abluftkanal 116 vorgesehen sein zum Schließen des Abluftkanals 116. Ein Regelventil kann variierbare Ventilöffnungsgrade realisieren.

Eine Entscheidung eines Regelgeräts (nicht dargestellt) des Lüftungsheizsystems 100 zum Umleiten oder Aufteilen oder zur Wahl der Luftanteile beim Aufteilen der abgeführten verbrauchten Luft 202 kann beispielsweise in Abhängigkeit der Frischluft-, Abluft- und/oder Raumtemperatur und/oder einer Raumluftqualität erfolgen. Weiter kann die Umleitung oder Aufteilung auch in Abhängigkeit eines erfassten Abtaufortschritts erfolgen.

In zumindest einem Abtau-Verfahrensschritt kann ein Volumenstrom einer den Verdampfer 152 durchströmenden Luft in seiner Größe und Zusammensetzung aus abgeführter verbrauchter Luft 202 und zusätzlicher frischer Luft 204 in Abhängigkeit von deren Größe, Temperatur und relativer Feuchte sowie eines Abtaufortschritts gesteuert oder geregelt wird. Dadurch kann sich eine verbesserte Abtauung ergeben. Insbesondere kann eine Zumischung relativ trockener zusätzlicher frischer Luft 204 zur abgeführten verbrauchten Luft 202 den Abtaufortschritt des Verdampfers 152 beschleunigen. Erfolgen kann dies insbesondere, indem eine Förderleistung des Ventilators 154 des Verdampfers 152 und/oder eine Förderleistung des Abluftgebläses 112 verändert, insbesondere geregelt und/oder gesteuert werden.

In zumindest einem Abtau-Verfahrensschritt kann eine Heizleistung des Nacherwärmers 104, insbesondere des von der Luft-Wärmepumpe 150 mit Wärme versorgten Nacherwärmers 104, in Abhängigkeit einer Zuführtemperatur der zugeführten frischen Luft 200 gesteuert oder geregelt, insbesondere erhöht, und/oder der Nacherwärmer 104 eingeschaltet werden.

Eine Regelung oder Steuerung, insbesondere Erhöhung, der Heizleistung des Nacherwärmers 104 kann erfolgen, insbesondere indem eine Temperatur und/oder ein Volumenstrom eines den Nacherwärmer 104 durchströmenden Wärmeträgerfluids gesteuert oder geregelt, insbesondere erhöht, wird.

Die Erfindung betrifft weiter ein Verfahren zum Betreiben eines Lüftungsheizsystems 100 zum Zuführen von frischer 200 Luft in mindestens einen Raum 1 und zum Abführen von verbrauchter Luft 202 aus dem mindestens einen Raum 1. Dieses Verfahren umfasst die Verfahrensschritte
- Erkennen eines Abtaubedarfs eines Luft/Luft-Wärmeübertragers 102 für eine Wärmerückgewinnung und/oder eines optionalen Wärmepumpen-Verdampfers 152 für eine Frischlufterwärmung,
- bei erkanntem Abtaubedarf Wechsel in einen Abtaubetrieb, wobei zumindest einer der vorstehend beschriebenen Abtau-Verfahrensschritte ausgeführt wird,
- Erkennen eines abgetauten Zustands des Luft/Luft-Wärmeübertragers 102 und/oder des Wärmepumpen-Verdampfers 152,
- bei erkanntem abgetauten Zustand Beenden des Abtaubetriebs.

Das Erkennen eines Abtaubedarfs und/oder eines abgetauten Zustands sind nicht Bestandteil dieser Erfindung.

Im Anschluss an den Abtaubetrieb wechselt das Lüftungsheizsystem 100 beispielsweise in einen Lüftungsheizbetrieb. Insbesondere wird die zugeführte frische Luft 200 wieder dem Zuluftkanal 114 des Luft/Luft-Wärmeübertragers 102 zugeleitet. Insbesondere wird der Volumenstrom der abgeführten verbrauchten Luft 202 auf einen Normalwert zurückgestellt oder geregelt. Insbesondere wird die Verdampferleistung des Verdampfers 152 auf einen Normalwert zurückgestellt oder geregelt. Insbesondere wird die Strömungsrichtung des zirkulierenden Kältemittels auf eine Normalrichtung zurückgestellt. Insbesondere wird der Volumenstrom der den Verdampfer 152 durchströmenden Luft auf einen Normalwert zurückgestellt oder geregelt. Insbesondere wird die Heizleistung des Nacherwärmers 104 auf einen Normalwert zurückgestellt oder geregelt. Unter einem Normalwert oder einer Normalrichtung wird hier insbesondere ein für einen Heiz-Verfahrensschritt benötigter Wert oder eine benötigte Richtung verstanden.

Alternativ kann das Lüftungsheizsystem 100 im Anschluss an den Abtaubetrieb auch in einen Lüftungskühlbetrieb schalten. Schließlich kann das Lüftungsheizsystem 100 im Anschluss an den Abtaubetrieb auch ausschalten.

Damit ist ein Verfahren geschaffen, mit dem ein Lüftungsheizsystem 100 zügig und mit geringem Energieaufwand abgetaut werden kann.

## Patentansprüche

1. **Verfahren** zum Betreiben eines Lüftungsheizsystems (100) zum Zuführen von frischer Luft (200) in mindestens einen Raum (1) und zum Abführen von verbrauchter Luft (202) aus dem mindestens einen Raum (1),
wobei in einem ersten Heiz-Verfahrensschritt zugeführte frische Luft (200) und abgeführte verbrauchte Luft (202) durch einen Luft/Luft-Wärmeübertrager (102) geführt werden und Wärme von der abgeführten verbrauchten Luft (202) auf die zugeführte frische Luft (200) übertragen wird,
wobei in einem optionalen zweiten Heiz-Verfahrensschritt mittels eines hinsichtlich der zugeführten frischen Luft (200) stromabwärts des Luft/Luft-Wärmeübertragers (102) angeordneten Nacherwärmers (104) weitere Wärme auf die zugeführte frische Luft (200) übertragen wird,
wobei der Luft/Luft-Wärmeübertrager (102) zeitweise vereisen kann,
**dadurch gekennzeichnet, dass** in zumindest einem Abtau-Verfahrensschritt der Luft/Luft-Wärmeübertrager (102) mittels einer von der abgeführten verbrauchten Luft (202) transportierten Wärme abgetaut wird.

2. Verfahren nach Anspruch 1,
wobei in dem zweiten Heiz-Verfahrensschritt die abgeführte verbrauchte Luft (202) aus dem Luft/Luft-Wärmeübertrager (102) als Wärmequelle auf einen Verdampfer (152) einer Luft-Wärmepumpe (150) geleitet wird, um ein in einem Kältemittelkreislauf der Luft-Wärmepumpe (150) zirkulierendes Kältemittel zumindest teilweise zu verdampfen, wobei von der Luft-Wärmepumpe (150) erzeugte Wärme mittels des Nacherwärmers (104) auf die zugeführte frische Luft (200) übertragen wird,
wobei der Verdampfer (152) zeitweise vereisen kann,
wobei in zumindest einem Abtau-Verfahrensschritt der Verdampfer (152) mittels einer von der abgeführten verbrauchten Luft (202) transportierten Wärme abgetaut wird.

3. Verfahren nach Anspruch 1 oder 2,
**dadurch gekennzeichnet, dass** in zumindest einem Abtau-Verfahrensschritt eine Temperatur des Luft/Luft-Wärmeübertragers (102), insbesondere eine Temperatur eines Abluftkanals (116) und/oder einer Wärmeübertragungsfläche (118) des Luft/Luft-Wärmeübertragers (102), erhöht wird.

4. Verfahren nach einem der vorhergehenden Ansprüche,
**dadurch gekennzeichnet, dass** in zumindest einem Abtau-Verfahrensschritt die zugeführte frische Luft (200) zumindest teilweise an dem Luft/Luft-Wärmeübertrager (102) vorbei durch einen Bypass (128) sowie insbesondere durch den Nacherwärmer (104) in den mindestens einen Raum (1) geleitet wird.

5. Verfahren nach einem der vorhergehenden Ansprüche,
**dadurch gekennzeichnet, dass** in zumindest einem Abtau-Verfahrensschritt ein Volumenstrom der abgeführten verbrauchten Luft (202) gesteuert oder geregelt, insbesondere erhöht, wird.

6. Verfahren nach einem der Ansprüche 2 bis 5,
**dadurch gekennzeichnet, dass** in zumindest einem Abtau-Verfahrensschritt die Verdampferleistung des Verdampfers (152) gesteuert oder geregelt, insbesondere verringert, wird.

7. Verfahren nach einem der Ansprüche 2 bis 6,
**dadurch gekennzeichnet, dass** in zumindest einem Abtau-Verfahrensschritt eine Strömungsrichtung des in dem Kältemittelkreislauf der Luft-Wärmepumpe (150) zirkulierenden Kältemittels gegenüber einer Strömungsrichtung des Kältemittels in einem Heiz-Verfahrensschritt umgedreht und der Verdampfer (152) von dem Kältemittel erwärmt wird.

8. Verfahren nach einem der Ansprüche 2 bis 7,
**dadurch gekennzeichnet, dass** in zumindest einem Abtau-Verfahrensschritt ein Volumenstrom einer den Verdampfer (152) durchströmenden Luft gesteuert oder geregelt, insbesondere verringert, wird und dem Volumenstrom der abgeführten verbrauchten Luft (202) angepasst, insbesondere angeglichen, wird.

9. Verfahren nach einem der Ansprüche 2 bis 8,
**dadurch gekennzeichnet, dass** in zumindest einem Abtau-Verfahrensschritt die abgeführte verbrauchte Luft (202) zumindest teilweise an dem Luft/Luft-Wärmeübertrager (102) vorbei durch einen weiteren Bypass (132) zu dem Verdampfer (152) geleitet wird.

10. Verfahren nach einem der Ansprüche 2 bis 9,
**dadurch gekennzeichnet, dass** in zumindest einem Abtau-Verfahrensschritt ein Volumenstrom einer den Verdampfer (152) durchströmenden Luft in seiner Größe und Zusammensetzung aus abgeführter verbrauchter Luft (202) und zusätzlicher frischer Luft (204) in Abhängigkeit von deren Größe, Temperatur und relativer Feuchte gesteuert oder geregelt wird.

11. Verfahren nach einem der vorhergehenden Ansprüche,
**dadurch gekennzeichnet, dass** in zumindest einem Abtau-Verfahrensschritt eine Heizleistung des Nacherwärmers (104), insbesondere des von der Luft-Wärmepumpe (150) mit Wärme versorgten Nacherwärmers (104), in Abhängigkeit einer Zuführtemperatur der zugeführten frischen Luft (200) gesteuert oder geregelt, insbesondere erhöht, und/oder der Nacherwärmer (104) eingeschaltet wird.

12. **Verfahren** zum Betreiben eines Lüftungsheizsystems (100) zum Zuführen von frischer Luft (200) in mindestens einen Raum (1) und zum Abführen von verbrauchter Luft (202) aus dem mindestens einen Raum (1), umfassend die Verfahrensschritte
• Erkennen eines Abtaubedarfs eines Luft/Luft-Wärmeübertragers (102) für eine Wärmerückgewinnung und/oder eines optionalen Wärmepumpen-Verdampfers (152) für eine Frischlufterwärmung,
• bei erkanntem Abtaubedarf Wechsel in einen Abtaubetrieb, wobei zumindest einer der Abtau-Verfahrensschritte nach einem der Ansprüche 1 bis 11 ausgeführt wird,
• Erkennen eines abgetauten Zustands des Luft/Luft-Wärmeübertragers (102) und/oder des Wärmepumpen-Verdampfers (152),
• bei erkanntem abgetauten Zustand Beenden des Abtaubetriebs.

13. **Lüftungsheizsystem** (100) zum Zuführen von frischer Luft (200) in mindestens einen Raum (1) und zum Abführen von verbrauchter Luft (202) aus dem mindestens einen Raum (1),
mit einem Luft/Luft-Wärmeübertrager (102) zu einer Rückgewinnung und Übertragung von Wärme von der abgeführten verbrauchten Luft (202) auf die zugeführte frische Luft (200),
optional mit einem hinsichtlich der zugeführten frischen Luft (200) stromabwärts des Luft/Luft-Wärmeübertragers (102) angeordneten Nacherwärmer (104) zum Übertragen von weiterer Wärme auf die zugeführte frische Luft (200),
wobei der Luft/Luft-Wärmeübertrager (102) und/oder ein Verdampfer (152) einer den Nacherwärmer (104) beheizenden Luft-Wärmepumpe (150) zeitweise einen vereisten Zustand aufweisen können,
**gekennzeichnet durch** ein Steuergerät und/oder Regelgerät, das dazu eingerichtet ist, zumindest ein Verfahren nach einem der Ansprüche 1 bis 12 auszuführen.
